# EUROPEAN PATENT APPLICATION

(11) **EP 1 650 474 A2**
(43) Date of publication of application: **26.04.2006**
(21) Application number: 05022485.6
(22) Date of filing: 14.10.2005
(51) Int. Cl.: F16H 7/08

(54) **Chain tensioner**

(30) Priority: 25.10.2004 US 621812 P; 19.07.2005 US 184206
(71) Applicant: Borgwarner, Inc., Auburn Hills MI 48326 (US)
(72) Inventor: Haesloop, Christian, J., Ithaca New York 14850 (US); Crockett, John, Etna New York 13062 (US)
(74) Representative: Petruzziello, Aldo

(57) **Abstract**

A mechanical anti-backdrive chain tensioner (10) includes a four-sided planar piston (14) and plastic chain shoe (22) assembly. A pair of helical compression springs (21) of opposite helices urges the piston (14) and shoe (22) assembly into the chain (24), and a ratchet plate pawl (32) prevents backdrive of the piston (14) but is designed with a predetermined amount of backlash. The planar-sided piston (14) permits a large engagement area with the mating ratchet plate pawl (32). The large pawl contact area of the planar piston (14) reduces tooth stress and withstands much higher anti-backdrive loads than prior art tensioners. The outer helical spring preferably has an outer diameter equal to the diameter of a bore hole in the piston (14) and an inner diameter equal to the outer diameter of the inner spring to produce frictional damping upon extension and compression of the springs (21).

## Description

### REFERENCE TO RELATED APPLICATIONS

This application claims an invention, which was disclosed in Provisional Application Number 60/621,812, filed October 25, 2004, entitled "CHAIN TENSIONER". The benefit under 35 USC §119(e) of the United States provisional application is hereby claimed, and the aforementioned application is hereby incorporated herein by reference.

### BACKGROUND OF THE INVENTION

### FIELD OF THE INVENTION

The invention pertains to the field of chain tensioners. More particularly, the invention pertains to a ratchet plate pawl tensioner including a large pawl contact area of a planar piston to reduce tooth stress and withstand high anti-backdrive loads.

### DESCRIPTION OF RELATED ART

Chain tensioners are used for tensioning chains such as engine timing chains or transmission drive chains. Chain tensioners are subdivided into hydraulic chain tensioners, mechanical chain tensioners, and combination chain tensioners with hydraulic and mechanical components.

U.S. Pat. No. 6,120,402, entitled "HYDRAULIC TENSIONER WITH EXTERNAL RACK HAVING BACKLASH RESTRICTION", discloses a hydraulic tensioner having an external rack member. The rack member has an extending member at its upper end that contacts wedges or grooves along the exterior of the piston to limit backdrive or backlash of the piston. The rack member has an end member at its lower end that is located in a groove in the tensioner housing. The rack member has a plurality of portions that are held together by a garter spring to form a single cylindrical piece.

U.S. Pat. No. 6,422,962, entitled "TIMING BELT TENSIONER WITH A BACKSTOP DEVICE WITH CONTROLLED ONE-WAY MECHANISM", discloses a tensioner for an endless belt including a pivotal tension arm with an idler pulley mounted on a stationary structure. A spring between the tension arm and the stationary structure acts to bias the pulley against the belt, thereby applying tension. The tensioner includes a one-way device that is operable in response to the extent of pivotal movement of the tension arm in the forward direction to establish different positions at which pivotal movement in the return direction is limited. A damping system is used to restrict pivotal movement of the tension arm as a result of sudden short-time vibratory movements or dynamic vibrations in cold conditions.

U.S. Pat. No. 6,464,604, entitled "HYDRAULIC TENSIONER WITH A HYDRAULICALLY CONTROLLED RACK" discloses a hydraulic tensioner having a hydraulically actuated rack member. A pair of check valves permit fluid to flow from an external source of pressurized fluid into a fluid chamber. The two check valves form a chamber that is substantially fluid-tight in order to provide sufficient pressure to prevent the piston from retracting upon de-energization of the source of pressurized fluid.

U.S. Pat. No. 6,478,703, entitled "RATCHET TENSIONER WITH BACKLASH", discloses a ratchet tensioner having a plunger retractably mounted in a housing and urged by a spring in a direction to project outward from the housing. The tensioner also has a ratchet pawl pivotally mounted on the housing with a first prong normally engaged with one of the ratchet teeth formed on the plunger to prevent backward motion of the plunger. The ratchet pawl also has a second prong spaced a predetermined distance from the first prong in the backward direction of the plunger. The second prong is engageable with a second rack tooth to release meshing engagement between the first prong and the rack tooth when the plunger is moved forward due to slack in the timing chain used with the tensioner. In order to maintain a predetermined amount of backlash between the first prong and the rack teeth, the rack teeth have a height greater than half of the pitch of the ratchet teeth.

Japanese Pat. App. No. JP52-107469, entitled "AUTOMATIC ADJUSTABLE CHAIN TENSIONER WITH BACK STOP", discloses an apparatus with a tensioning mechanism as well as a process of manufacture. The mechanism is designed for the absorption of the extension of a balancer chain for a balancer driving or timing chain of an engine.

Mechanical tensioners for chain drives which incorporate an anti-backdrive mechanism with backlash are known. Hydraulic tensioners incorporating a mechanical anti-backdrive mechanism with limited range of travel are also known. However, there is a need in the art for a mechanical tensioner, which reduces tooth stress and withstands much higher anti-backdrive loads than prior art tensioners.

### SUMMARY OF THE INVENTION

A mechanical anti-backdrive chain tensioner preferably includes a four-sided planar piston and plastic chain shoe assembly. A pair of helical compression springs of opposite helices urges the piston and shoe assembly into the chain, and a ratchet plate pawl prevents backdrive of the piston but is designed with a predetermined amount of backlash. The planar-sided piston permits a large engagement area with the mating ratchet plate pawl. The large pawl contact area of the planar piston reduces tooth stress and withstands much higher anti-backdrive loads than prior art tensioners. The outer helical spring preferably has an outer diameter equal to the diameter of a bore hole in the piston and an inner diameter equal to the outer diameter of the inner spring to produce frictional damping upon extension and compression of the springs.

The chain tensioner includes a piston having at least one planar side having a plurality of piston ratchet teeth. The chain tensioner also includes at least one ratchet plate pawl having a plurality of pawl ratchet teeth complementary to the piston ratchet teeth. The chain tensioner further includes a ratchet biasing element for urging the ratchet plate pawl toward the piston.

Preferably, the piston further includes an inside bore, and a first piston biasing element is located within the inside bore of the piston for urging the piston toward the chain. In one embodiment, the inside bore of the piston is in contact with the first piston biasing element, causing friction and damping between the piston and the first piston biasing element upon compression and expansion of the first piston biasing element. In another embodiment, the chain tensioner further includes a second piston biasing element within the first piston biasing element for urging the piston toward the chain. The first piston biasing element is preferably in contact with the second piston biasing element, causing friction and damping between the first piston biasing element and the second piston biasing element upon compression and expansion of the first piston biasing element and the second piston biasing element. The first piston biasing element is preferably a first helical spring and the second piston biasing element is a second helical spring having an opposite-handed helix to the first helical spring.

The chain tensioner preferably includes a bracket, wherein the piston and the pawl are positioned within the bracket, and the bracket is preferably formed from a single piece of stamped steel. The tensioner preferably includes a shoe having a first surface rigidly affixed onto the piston and a second surface opposite the first surface for engaging the chain. The ratchet biasing element is preferably a leaf spring, a helical compression spring, or an accordion spring. The pawl ratchet teeth preferably engage the piston ratchet teeth to move in unison a predetermined distance along an axial direction of the piston, where the predetermined distance is chosen to provide a backlash amount. The piston ratchet teeth preferably extend the entire width of the at least one planar side. In a preferred embodiment, the piston includes a set of four planar sides.

In an embodiment of the present invention, the piston includes a first planar side having a first plurality of piston ratchet teeth and a second planar side having a second plurality of piston ratchet teeth. The second planar side is located opposite the first planar side. A first ratchet plate pawl includes a first plurality of pawl ratchet teeth complementary to the first piston ratchet teeth, and a second ratchet plate pawl includes a second plurality of pawl ratchet teeth complementary to the second piston ratchet teeth. The first piston ratchet teeth preferably have the same pitch as the second ratchet teeth. In one embodiment, the first piston ratchet teeth are offset along the piston axis from the second piston ratchet teeth such that ratcheting alternates between the first pawl ratchet teeth and the second pawl ratchet teeth. In another embodiment, the first piston ratchet teeth align with the second piston ratchet teeth along the piston axis such that the first pawl ratchet teeth and the second pawl ratchet teeth ratchet at the same time.

In another embodiment of the present invention, the chain tensioner includes a piston having an inside bore and a first piston biasing element located within the inside bore of the piston for urging the piston toward the chain. The inside bore of the piston is in contact with the first piston biasing element, causing friction and damping between the piston and the first piston biasing element upon compression and expansion of the first piston biasing element. In another embodiment, the tensioner includes a second piston biasing element within the first piston biasing element for urging the piston toward the chain. The first piston biasing element is preferably in contact with the second piston biasing element, causing friction and damping between the first piston biasing element and the second piston biasing element upon compression and expansion of the first piston biasing element and the second piston biasing element. Preferably, the first piston biasing element is a first helical spring and the second piston biasing element is a second helical spring having an opposite-handed helix to the first helical spring.

In yet another embodiment of the present invention, the chain tensioner includes a piston having an inside bore, a first piston biasing element located within the inside bore of the piston for urging the piston toward the chain, and a second piston biasing element within the first piston biasing element for urging the piston toward the chain. The first piston biasing element is in contact with the second piston biasing element, causing friction and damping between the first piston biasing element and the second piston biasing element upon compression and expansion of the first piston biasing element and the second piston biasing element. Preferably, the first piston biasing element is a first helical spring and the second piston biasing element is a second helical spring having an opposite-handed helix to the first helical spring.

### BRIEF DESCRIPTION OF THE DRAWINGS

Fig. 1 shows a cross section of a tensioner in a first embodiment of the present invention.
Fig. 2 shows a first perspective view of a tensioning system of the present invention.
Fig. 3 shows a second perspective view of a tensioning system of the present invention.
Fig. 4 shows a third perspective view of a tensioning system of the present invention.
Fig. 5A shows a sectional view of a stamped steel bracket of the present invention.
Fig. 5B shows a sectional view of a stamped steel bracket and a helical coil spring of the present invention.
Fig. 6 shows a cross section of a tensioner in a second embodiment of the present invention.
Fig. 7 shows a perspective view of a third embodiment of the present invention.
Fig. 8 shows a top view of a four-sided bracket in an embodiment of the present invention.
Fig. 9 shows a top view of a piston in another embodiment of the present invention.
Fig. 10 shows a top view of a piston in yet another embodiment of the present invention.

### DETAILED DESCRIPTION OF THE INVENTION

An improved pure mechanical anti-backdrive chain tensioner 10 includes a four-sided planar piston 14 and a plastic chain shoe 22 assembly. Helical compression springs 21 urge the piston 14 and shoe 22 assembly into the chain 24, and a ratchet plate pawl 32 prevents backdrive of the piston 14 but is designed for a predetermined amount of backlash. The planar-sided piston 14 permits a large engagement area with the mating ratchet plate pawl 32. The large pawl contact area of the planar piston 14 reduces tooth stress and withstands much higher anti-backdrive loads than prior art tensioners.

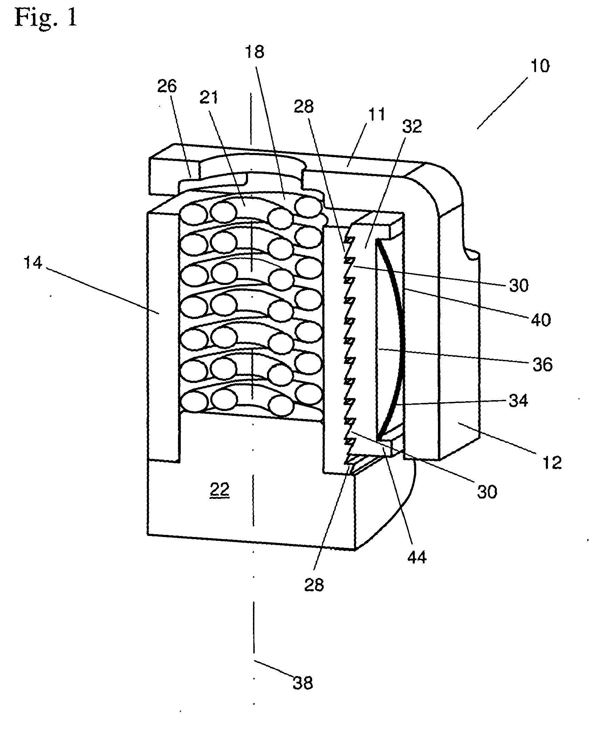

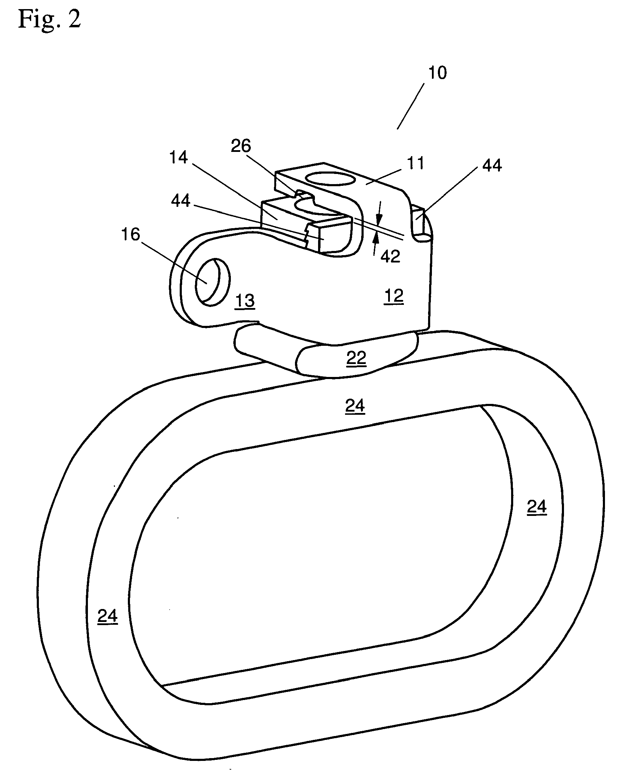

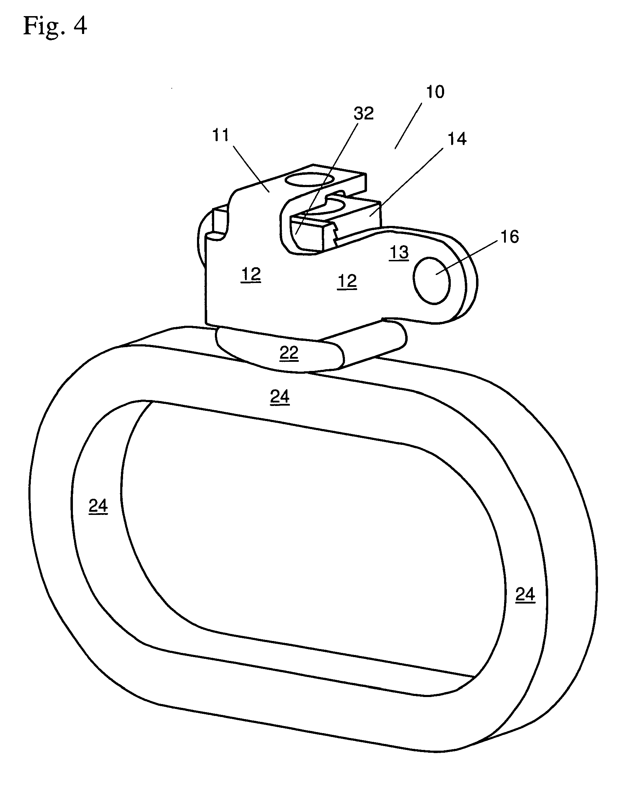

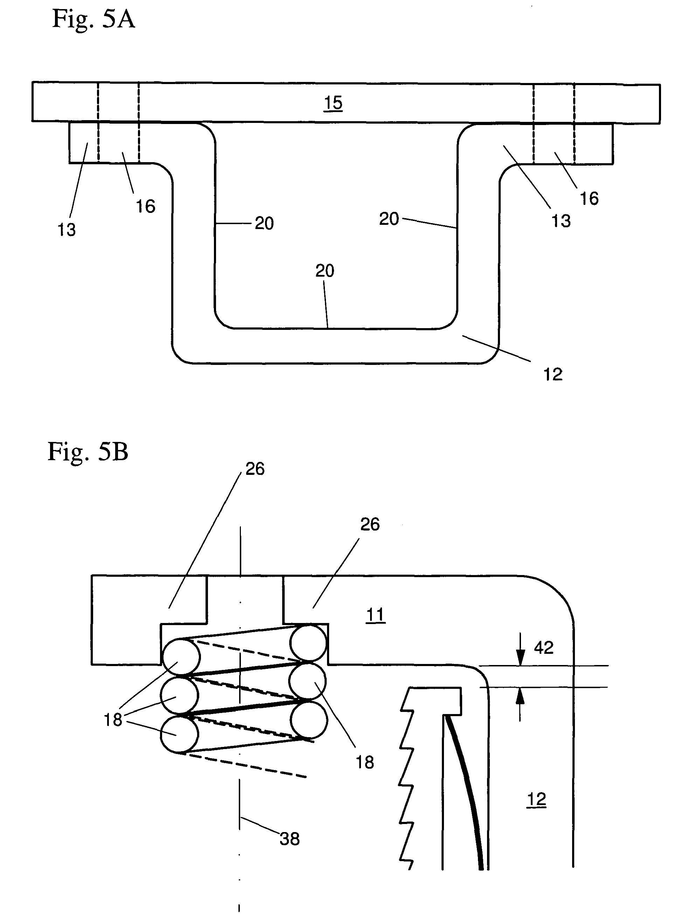

Referring to Fig. 1 through Fig. 6, the mechanical anti-backdrive chain tensioner 10 with backlash preferably includes a stamped steel bracket 12 which houses a four-sided planar piston 14. The piston 14 shown has square sides. However, the piston may have any four-sided shape, such as a trapezoid. The bracket 12 is "U" shaped with mounting feet 13 and bolt holes 16 on each side of the "U". The four sides of the piston 14 are guided by the engine or other mounting surface 15 on the open side of the "U" and the three closed stamped steel sides 20 on the remaining sides. The center of the piston 14 is hollow to package at least one helical coil spring 18. Preferably two springs are packaged in the piston 14: a left-hand helical coil spring 18 and a righthand helical coil spring 21. Although the inner spring 21 is shown as right-handed and the outer spring 18 is shown as left-handed, the handedness of the two springs may be reversed.

In one embodiment, opposite helical springs are preferred, since they prevent coil tangling. Multiple springs are also preferred to produce sufficient force for adequate chain control. The design of the springs may also incorporate a friction damping feature by allowing interference and rubbing between the outside diameter of the inner spring with the inside diameter of the outer spring. Additional damping may be achieved by allowing interference and rubbing between the outside diameter of the outer spring and the inside diameter of the hollow piston.

Further, the bracket 12 has at least one flange 13 with mounting holes 16 disposed therein for mounting onto a foreign member 15. The bracket is preferably formed from a single flat piece of stamped steel. Although the foreign member is typically an engine mounting surface, the foreign member may alternatively be, but is not limited to, the inner portions of an internal combustion engine, a transmission case, a chain case, or a transfer case. The invention may be used with any system, which uses a mechanical tensioner, such as an oil pump drive, a timing drive, a chain transmission drive, or a balance shaft drive.

A plastic shoe 22 is attached to the piston 14 and engages a chain 24. The chain 24 may be any type of chain including, but not limited to, a silent chain, a roller chain, or a combination of the two. The helical spring 18 reacts against a stationary stamped steel tab 11 formed perpendicular to the spring axis 38, which is also the piston axis. The helical spring 18 provides tension to the chain by urging the piston 14 and shoe 22 assembly against the chain 24.

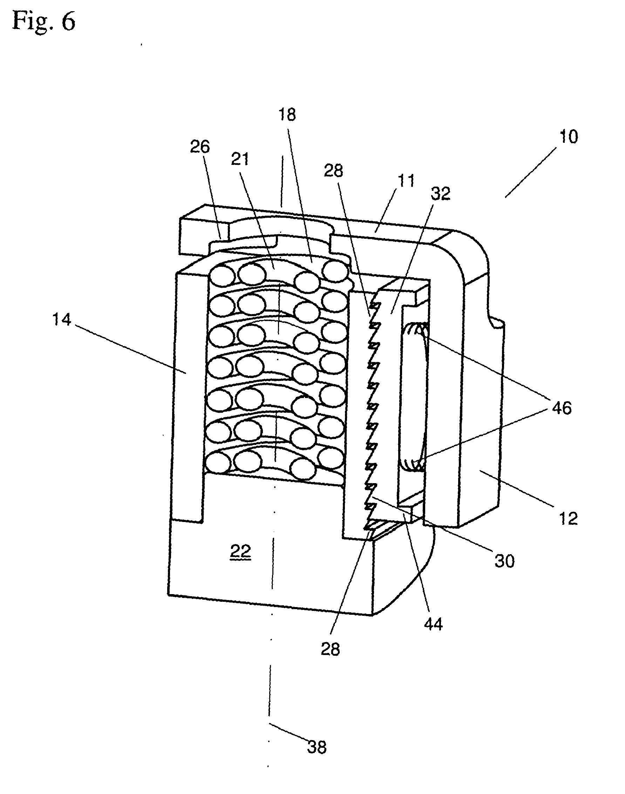

One side of the piston has ratchet teeth 28 that engage complementary ratchet teeth 30 having the same pitch on a movable ratchet plate pawl 32. The planar-sided piston 14 permits a large engagement area for mating with the ratchet plate pawl 32. In other words, one complete side of the four-sided piston 14 may be used to form the ratchet teeth 28 that engage complementary ratchet teeth 30 on the movable ratchet plate pawl 32. The large pawl contact area preferably takes the whole side of the piston 14, which reduces tooth stress by increasing the tooth contact area. The large contact area also withstands much higher anti-backdrive loads than prior art tensioners and consequently improves tensioner 10 robustness. A leaf spring 34 urges the ratchet plate pawl 32 via force perpendicular to the piston axis into engagement through its own teeth 30 with the ratchet teeth 28 integral with the piston 14. The leaf spring 34 is packaged and captured within a recess 36 on the ratchet plate pawl 32. Other types of springs may be used instead of a leaf spring 34, including one or more springs 46 as shown in Fig. 6, which may include a helical compression spring or an accordion type spring. The spring 34 reacts and slides against the side 40 of the "U".

A chain tensioner of the present invention is designed for use with chains, which typically develop a significant amount of slack strand during operation. The slack strand develops due to elongation from chain wear. The ratcheting mechanism provides a slack strand take-up feature. The backlash feature prevents over-ratcheting.

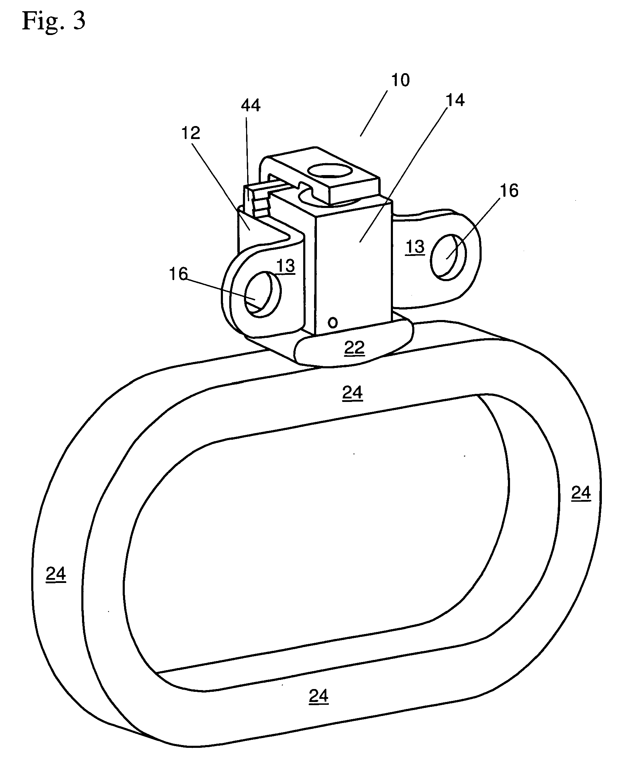

The ratchet plate pawl 32 is preferably designed with a predetermined amount of movement along the direction of the piston axis 38 which gives a first backlash feature to the tensioner 10. The ratchet plate pawl 32 is T-shaped and the ears 44 of the pawl are positioned within a gap opening formed in the bracket between the stationary stamped steel tab 11 and the top edges of the "U". In Fig. 3 an ear 44 is clearly seen extending out over the stamped steel bracket 12. The two ears limit downward movement of the ratchet plate pawl 32 by contacting the top edges of the stamped steel bracket 12. The top tab 11 of the stamped steel bracket limits upward movement of the ratchet plate pawl. The clearance 42 created by the difference of the stamping gap and the ear 44 width provides the predetermined amount of backlash movement for the first backlash feature of the invention.

The second backlash feature comes from the interaction between the two sets of ratchet teeth. The pitch of the ratchet teeth allows a second degree of backlash. The stamping is formed to limit the travel of the ratchet plate pawl 32 perpendicular to the piston 14 axis. When the piston 14 extends outward towards the chain 24, the pawl 32 travels with the piston 14 until the pawl 32 stops against the top edges of the "U". At this point, as the piston 14 continues to move outward greater than a ratchet tooth pitch, the ratchet teeth 28 on the piston 14 advance with respect to the stationary pawl teeth 30. If the piston 14 moves inward due to an increase in chain 24 load, the pawl 32 travels with the piston 14 until the pawl 32 stops against the stamping tab 11. The ratchet teeth 28, 30 are engaged and locked between the piston 14 and the stopped pawl 32, which provides an anti-backdrive feature.

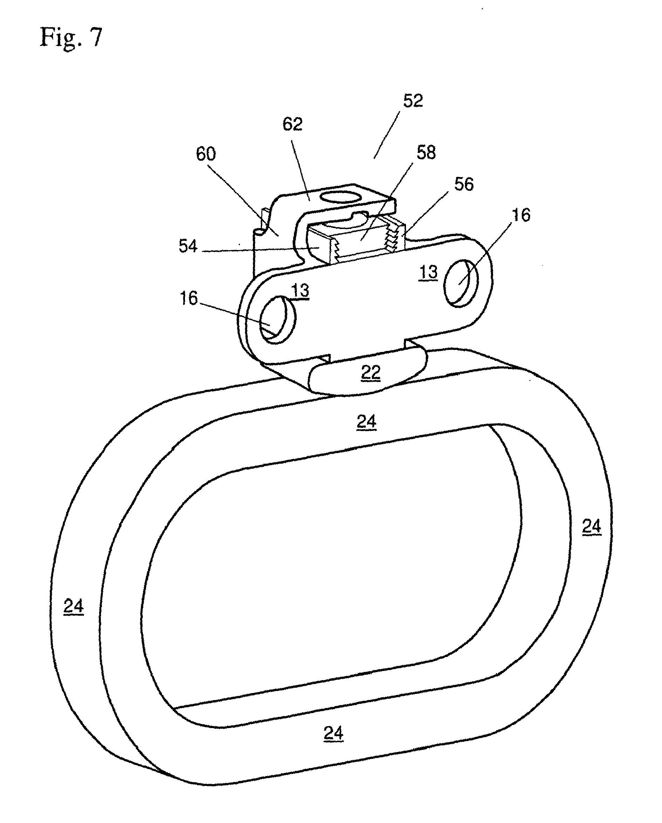

Referring to Fig. 7, in another embodiment of the present invention, the tensioner 52 has two ratchet plate pawls 54, 56 with complementary teeth for the piston 58, which has ratchet teeth on two opposite planar sides. The bracket 60 is modified to have a tab 62 bent over the top coming from a side rather than the front, and the bracket 60 encloses the pawls 54, 56 and piston 58 on all four sides with at least one flange 13 with mounting holes 16. Each pawl is T-shaped with an ear on either side as in the single pawl embodiments. The addition of a second ratchet surface allows for a finer ratcheting control. The two sets of surfaces are preferably either aligned to ratchet at the same time or offset by a half-pitch, or 180 degrees out of phase, so that the teeth click alternately on the two sides of the piston. For the offset design, the double ratchet system extends and retracts at a half-pitch.

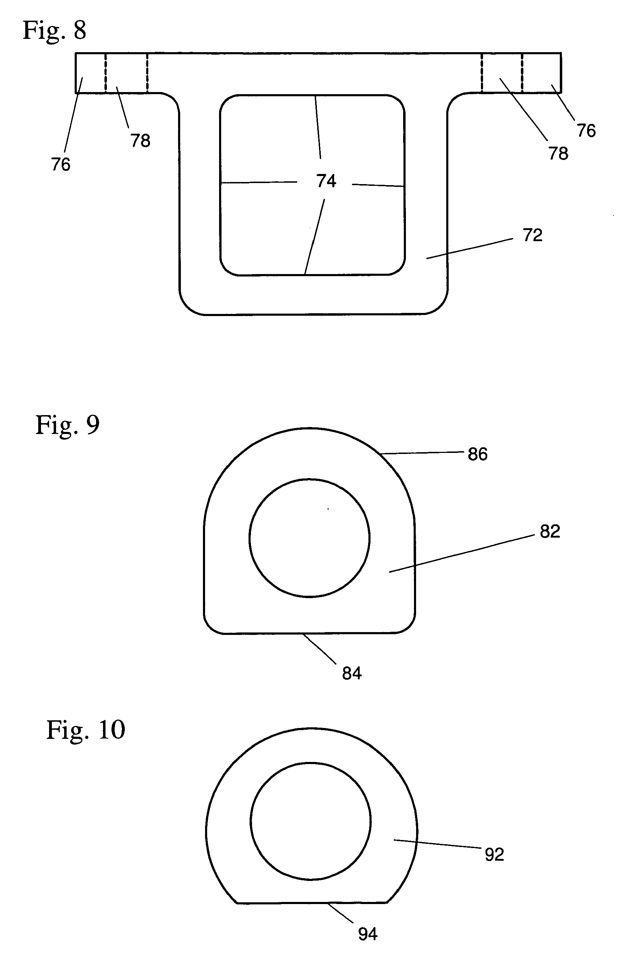

Referring to Fig. 8, the stamped steel bracket may be replaced with a bracket 72 having four planar interior sides 74. Although this design is more complicated to manufacture, enclosing the piston on all four sides creates a sturdier housing for the tensioner. The bracket is preferably drilled with a cylindrical hole initially, and the square or rectangular hole is formed from the cylindrical hole by broaching. The bracket 72 preferably has mounting feet 76 with bolt holes 78 for mounting the tensioner.

Referring to Fig. 9 and Fig. 10, alternative piston profiles of a tensioner of the present invention are shown. In Fig. 9, the piston 82 has only one planar side 84 with the remainder of the profile being curved 86. The planar side 84 has complementary ratchet teeth for mating with the teeth of a ratchet plate pawl. The planar side 84 has the same surface area as a planar side of a piston with four planar sides of the same width. In Fig. 10, the planar side 94 of the piston 92 is formed by milling away part of the otherwise circular cross section of the piston to form a flat surface. The planar side 94 has complementary ratchet teeth for mating with the teeth of a ratchet plate pawl.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A chain tensioner for tensioning a chain, the chain tensioner comprising:
a piston comprising at least one planar side comprising a plurality of piston ratchet teeth;
at least one ratchet plate pawl comprising a plurality of pawl ratchet teeth complementary to the piston ratchet teeth; and
a ratchet biasing element for urging the ratchet plate pawl toward the piston.

2. The tensioner of claim 1, wherein the piston further comprises an inside bore and the chain tensioner further comprises a first piston biasing element located within the inside bore of the piston for urging the piston toward the chain.

3. The tensioner of claim 2, wherein the inside bore of the piston is in contact with the first piston biasing element, causing friction and damping between the piston and the first piston biasing element upon compression and expansion of the first piston biasing element.

4. The tensioner of claim 2 further comprising a second piston biasing element within the first piston biasing element for urging the piston toward the chain.

5. The tensioner of claim 4, wherein the first piston biasing element is in contact with the second piston biasing element, causing friction and damping between the first piston biasing element and the second piston biasing element upon compression and expansion of the first piston biasing element and the second piston biasing element.

6. The tensioner of claim 4, wherein the first piston biasing element is a first helical spring and the second piston biasing element is a second helical spring having an opposite-handed helix to the first helical spring.

7. The tensioner of claim 1 further comprising a bracket, wherein the piston and the pawl are positioned within the bracket.

8. The tensioner of claim 7, wherein the bracket is formed from a single piece of stamped steel.

9. The tensioner of claim 1 further comprising a shoe having a first surface rigidly affixed onto the piston and a second surface opposite the first surface for engaging the chain.

10. The tensioner of claim 1, wherein the ratchet biasing element is selected from the group consisting of:
a) a leaf spring;
b) a helical compression spring; and
c) an accordion spring.

11. The tensioner of claim 1, wherein the pawl ratchet teeth engage the piston ratchet teeth to move in unison a predetermined distance along an axial direction of the piston.

12. The tensioner of claim 11, wherein the predetermined distance is chosen to provide a backlash amount.

13. The tensioner of claim 1, wherein the piston ratchet teeth extend the entire width of the at least one planar side.

14. The tensioner of claim 1, wherein the piston comprises a set of four planar sides.

15. The tensioner of claim 1, wherein the at least one planar side comprises a first planar side comprising a first plurality of piston ratchet teeth and a second planar side comprising a second plurality of piston ratchet teeth, wherein the second planar side is located opposite the first planar side; and
wherein the at least one ratchet plate pawl comprises a first ratchet plate pawl comprising a first plurality of pawl ratchet teeth complementary to the first piston ratchet teeth and a second ratchet plate pawl comprising a second plurality of pawl ratchet teeth complementary to the second piston ratchet teeth.

16. The tensioner of claim 15, wherein the first piston ratchet teeth have the same pitch as the second ratchet teeth and the first piston ratchet teeth are offset along the piston axis from the second piston ratchet teeth such that ratcheting alternates between the first pawl ratchet teeth and the second pawl ratchet teeth.

17. The tensioner of claim 15, wherein the first piston ratchet teeth have the same pitch as the second ratchet teeth and the first piston ratchet teeth align with the second piston ratchet teeth along the piston axis such that the first pawl ratchet teeth and the second pawl ratchet teeth ratchet at the same time.

18. A chain tensioner for tensioning a chain, the chain tensioner comprising:
a piston having an inside bore;
a first piston biasing element located within the inside bore of the piston for urging the piston toward the chain; and
wherein the inside bore of the piston is in contact with the first piston biasing element, causing friction and damping between the piston and the first piston biasing element upon compression and expansion of the first piston biasing element.

19. The tensioner of claim 18, further comprising a second piston biasing element within the first piston biasing element for urging the piston toward the chain;
wherein the first piston biasing element is in contact with the second piston biasing element, causing friction and damping between the first piston biasing element and the second piston biasing element upon compression and expansion of the first piston biasing element and the second piston biasing element.

20. The tensioner of claim 19, wherein the first piston biasing element is a first helical spring and the second piston biasing element is a second helical spring having an opposite-handed helix to the first helical spring.

21. A chain tensioner for tensioning a chain, the chain tensioner comprising:
a piston having an inside bore;
a first piston biasing element located within the inside bore of the piston for urging the piston toward the chain; and
a second piston biasing element within the first piston biasing element for urging the piston toward the chain;
wherein the first piston biasing element is in contact with the second piston biasing element, causing friction and damping between the first piston biasing element and the second piston biasing element upon compression and expansion of the first piston biasing element and the second piston biasing element.

22. The tensioner of claim 21, wherein the first piston biasing element is a first helical spring and the second piston biasing element is a second helical spring having an opposite-handed helix to the first helical spring.
